# EUROPÄISCHE PATENTANMELDUNG

(11) **EP 3 388 991 A1**
(43) Veröffentlichungstag der Anmeldung: **17.10.2018**
(21) Anmeldenummer: 18166568.8
(22) Anmeldetag: 10.04.2018
(51) Int. Cl.: G06Q 10/08

(54) **VERFAHREN ZUR LADETRÄGER- UND STÜCKGUT-IDENTIFIZIERUNG, SOWIE VERFAHREN ZUR IDENTIFIZIERUNG UND ORTUNG VON FAHRZEUGEN IM STRASSENGEBUNDENEN GÜTERVERKEHR**

(30) Priorität: 10.04.2017 DE 102017107713; 14.06.2017 DE 102017113125
(71) Anmelder: BPW Bergische Achsen KG, 51674 Wiehl (DE)
(72) Erfinder: Lutze, Alexander, 51491 Oberath (DE); Huperz, David, 51427 Bergisch Gladbach (DE); Sassenrath, Marcus, 54207 Wiesbaden (DE)
(74) Vertreter: Bungartz Christophersen Partnerschaft mbB Patentanwälte

(57) **Zusammenfassung**

Vorgeschlagen wird erstens ein Verfahren zur Ladeträger und Stückgut-Identifizierung im Güterverkehr. Die Ladeträger bzw. Stückgüter sind im Laderaum eines Nutzfahrzeugs angeordnet und jeweils mit signalabgebend oder signalreflektierend ausgebildeten Transpondern mit Funkeinheit (in Folgenden "Tag") versehen. Die Tag-Signale werden durch eine stationäre Sende- und Empfangseinheit eines allgemeinen Telekommunikationsnetzes erfasst. Um im Rahmen eines EDV-gestützten Logistikmanagements zu einer zuverlässigen Identifizierung der in den Laderäumen von Nutzfahrzeugen transportierten Ladeträger und Stückgüter zu gelangen, ist die stationäre Sende- und Empfangseinheit für Signale in mindestens einem Kommunikations-Schmalband oder -Ultraschmalband ausgebildet. Die Tag-Signale werden ausschließlich über das Schmalband bzw. Ultraschmalband an die stationäre Sende- und Empfangseinheit übertragen.

Vorgeschlagen wird zweitens ein Verfahren zur Ortung und Identifizierung von Fahrzeugen im Güterverkehr, wobei die Fahrzeuge jeweils mit signalabgebend oder signalreflektierend ausgebildeten Transpondern mit Funkeinheit (in Folgenden "Tag") versehen sind. Die Tag-Signale werden durch die stationäre Sende- und Empfangseinheit erfasst. Um zu einer zuverlässigen Identifizierung und Lokalisierung der Fahrzeuge zu gelangen, ist die stationäre Sende- und Empfangseinheit für Signale in mindestens einem Kommunikations-Schmalband oder -Ultraschmalband ausgebildet. Die Tag-Signale werden ausschließlich über das Schmalband bzw. Ultraschmalband an die stationäre Sende- und Empfangseinheit übertragen.

## Beschreibung

Die Erfindung betrifft erstens ein Verfahren zur Ladeträger- und Stückgut-Identifizierung im Güterverkehr nach dem Oberbegriff des Patentanspruchs 1.

Ladeträger wie z. B. mit Produkten beladene Paletten und sonstige Stückgüter, welche im Laderaum von Nutzfahrzeugen transportiert werden, sind für Zwecke der Logistik häufig einzeln mit Identifizierungsmitteln versehen, z. B. mit einem Barcode oder einem QR-Code, welcher mittels geeigneter Scanner identifizierbar ist. Durch einfaches Scannen lässt sich daher nicht nur der jeweilige Ladeträger bzw. das Stückgut identifizieren, sondern durch Verknüpfen dieser Information mit Systemdaten eines EDV-gestützten Logistikmanagements lässt sich auch die konkrete Bestimmung des jeweiligen Ladeträgers bzw. Stückguts ermitteln. Ebenfalls im Rahmen des Logistikmanagements lässt sich darauf aufbauend z. B. der Bedarf für einen Weitertransport der beladenen Paletten oder der sonstigen Stückgüter ermitteln, sowie die unternehmensübergreifende Zusammenlegung von Transporten und weitere logistische Entscheidungen treffen.

Diese Möglichkeiten bestehen allerdings nur bei stehendem Fahrzeug aufgrund der dann erst bestehenden Möglichkeit der zuverlässigen Identifizierung des jeweiligen Stückguts.

Der Erfindung liegt daher die Aufgabe zugrunde, zu einer im Rahmen eines EDV-gestützten Logistikmanagements flexibleren Lösung einer zuverlässigen Identifizierung und Geolokalisierung der in den Laderäumen von Nutzfahrzeugen transportierten Ladeträger und Stückgüter zu gelangen.

Zur Lösung dieser Aufgabe wird ein Verfahren zur Ladeträger- und Stückgut-Identifizierung im Güterverkehr mit den Merkmalen des Anspruchs 1 vorgeschlagen.

Bei diesem Verfahren werden die Signale der auf dem Ladeträger oder an dem Stückgut befestigten oder des der Ladung beigelegten Transponders mit Funkeinheit (im Folgenden "Tag") ausschließlich über das Schmalband oder das Ultraschmalband an die stationäre Sende- und Empfangseinheit übertragen. Der mit dem Transponder bzw. Tag versehene Ladeträger kann z. B. eine mit einzelnen Produkten beladene Transportpalette sein oder ein sonstiges Stückgut, welches im Laderaum eines Nutzfahrzeugs platziert ist und so an den Bestimmungsort transportiert wird.

Die für die Signalübertragung ausschließlich verwendete Technologie ist vorzugsweise die Narrowband- oder Ultranarrowband-Technologie.

Eine Signalübertragung des Transponders mit Funkeinheit (nachfolgend auch "Tag") mit diesen Technologien hat den Vorteil eines energiesparenden Betriebs des einzelnen Tags, da hier zwar die Datentransferraten reduziert sind, aber anderseits der Energiebedarf nur bei einem Bruchteil der herkömmlichen Mobilfunktechnologien liegt. Dies kann zusätzlich dadurch unterstützt werden, dass das Tag nur sendet, wenn es sich in Bewegung befindet. Auf diese Weise wird eine besonders effiziente und energiearme Tag-Vernetzung erreicht - die Grundlage für ein darauf aufbauendes, höchst effizientes Logistikmanagement im Güterverkehr.

Die autarke Stromversorgung des einzelnen Tags bzw. Transponders erfolgt vorzugsweise durch eine direkt daran angebrachte Spannungsquelle. Diese kann elektrisch wieder aufladbar sein, wobei das Aufladen erfolgt, bevor der Tag an dem Ladeträger bzw. Stückgut befestigt wird. Außerdem können zum Laden der Spannungsquelle "energy harvesting" Techniken zum Einsatz kommen, vorzugsweise das Gewinnen elektrischer Energie aus Quellen wie Umgebungstemperatur, Vibrationen, Bewegungen oder Luftströmungen.

Die zu der stationären Sende- und Empfangseinheit gelangenden Tag-Signale umfassen zumindest eine für die jeweilige Funkeinheit individuelle Kennung. Zusätzlich können, sofern der Tag vorher entsprechend aktiviert bzw. mit der entsprechenden Sensorik ausgestattet ist, die übertragenen Tag-Signale die Geoposition umfassen oder Temperatur-, Erschütterungs- oder sonstige Sensordaten. Die übertragenen Transponder-Signale können außerdem Größendaten und / oder Gewichtsdaten umfassen. Sie können außerdem Informationen über ein unbeachsichtigtes und / oder missbräuchliches Entfernen des Tags von dem Ladeträger bzw. Stückgut umfassen.

Die von der stationären Sende- und Empfangseinheit empfangenen Tagsignale werden zusammen z. B. mit Positionsdaten des aktuellen Tag-Standorts und / oder den Standortdaten der die Signale empfangenden stationären Sende- und Empfangseinheit zu einem Datensatz zusammengestellt, und der Datensatz wird an eine Datenbank übermittelt.

Für ein effektives Logistikmanagement ist die Software, die auf die Datenbank zugreift und die Tag-Daten verarbeitet in der Weise ausgestaltet, dass die individuelle Kennung und z. B. die Positionsdaten oder sonstige Sensordaten, insbesondere Daten über den Zustand des Transportgutes, der Verpackung oder der Ladungssicherung mit Eigenschaftsdaten des jeweiligen Stückguts wie z. B. Größen- oder Gewichtsdaten, Sender- oder Empfängeradresse, oder anderweitig bezogenen Daten wie Verkehr-, Wetter-, oder Transportrisikoinformationen sowie mit in einer Datenbank zur Verfügung stehenden Systemdaten eines Logistikmanagements verknüpft werden.

Zu diesen Systemdaten eines EDV-gestützten Logistikmanagements können auch das Transportvolumen, die Eigenschaften des Transportgutes oder des Ladeträgers oder die maximale Zuladung der einzelnen eingesetzten oder der verfügbaren Nutzfahrzeuge gehören.

Die in einer entsprechenden Datenbank gespeicherten Systemdaten schaffen die Grundlage dafür, dass die Software für die Nutzfahrzeuge deren Restladevolumen und / oder deren Restladegewicht bestimmen, Empfehlungen zur Optimierung des einzelnen Transports oder des gesamten Logistikprozesses, Warnung vor Verstößen gegen Sicherheitsvorgaben oder Vorschläge für die unternehmensübergreifende Zusammenlegung von Transporten geben kann.

Die Software kann ferner ausgestaltet sein, die individuelle Kennung des signaltechnisch erfassten Tags und z. B. seine Positionsdaten mit Daten eines satellitengestützten Fahrzeug-Navigationssystems einschließlich Daten zum Fahrtziel zu verknüpfen. Auf diese Weise kann von der Auswerteeinheit z. B. die voraussichtliche Ankunftszeit am Fahrtziel sowie die restliche Fahrstrecke bis an das Fahrtziel ermittelt werden. Vorzugsweise werden hierzu von der Software auch Informationen anderer Tags verwendet, nämlich über deren Positionen und / oder Fortbewegungsgeschwindigkeiten und / oder deren Bewegungen und / oder Erschütterungen. Auch Verkehrs- oder Wetterdaten können von der Software verwendet werden.

Mobilfunkkommunikationssysteme wie z. B. solche nach dem LTE Standard sind auf große Datentransferraten ausgelegt, was mit dem Nachteil eines hohen Energieverbrauchs bei den mobilen Sendegeräten verbunden ist. Mit der Schmalband- und der Ultra-Schmalband-Technologie ("NarrowBand" bzw. "Ultranarrowband") geht man den entgegengesetzten Weg: die Datentransferraten sind gering, und dadurch ist auch der Energiebedarf der Mobilgeräte gering. Das Schmalband ermöglicht daher eine besonders effiziente und stromsparende Vernetzung von Geräten, die mit (Ultra-)Narrowband Funkeinheiten ausgestattet sind.

Durch eine Reduktion auf wenige, aber wesentliche Eigenschaften können (Ultra)-Narrowband Funkeinheiten je nach Anwendungsfall jahrelang mit einer Akku-Ladung bzw. einer Batterieladung auskommen. Zudem bietet sich für die Stromversorgung die Technik des "energy harvesting" an, also die Gewinnung kleiner Mengen elektrischer Energie aus Quellen wie der schwankenden Umgebungstemperatur, Vibrationen oder Luftströmungen.

Die Schmalband- und Ultraschmalbandtechnologie ermöglicht eine bessere Nachrichtenübertragung auch in Gebäuden. In Kombination mit einer cloudgestützten Lokalisierungsfunktion kann damit auch in Industriegebäuden eine Position eines dort zwischengelagerten Stückguts bestimmt werden. Mit herkömmlichen GPS-Sensoren und GSM ist dies oft nicht sehr zuverlässig möglich, auf Grund des hohen Metallanteils in der Baumasse.

Die hier beschriebene Technik hat außerdem den Vorteil, dass die dabei eingesetzten Sende- und Empfangseinheiten wesentlich mehr Funkeinheiten verwalten können, als herkömmliche Mobilfunktechnologien. Das (Ultra-)Narrowband ist sehr gut für "Internet of Things" Anwendungen geeignet, also wenn es darum geht, sehr viele mit Funkeinheiten ausgestattete Geräte mit dem Internet zu verbinden. Geräte also, die nur wenige Daten senden und empfangen müssen. Die auf dieser Technik beruhende Software bzw. die darauf beruhenden Logistik-Dienstleistungen ermöglichen vorausschauende Wartung, Geolokalisierung, Überwachung von Transportbedingungen, nutzungsbasierte Abrechnungsmodelle, unternehmensübergreifende Vernetzung von Transporten oder einfache Telematik-Anwendungen.

Die Erfindung betrifft zweitens ein Verfahren zur Identifizierung und Ortung von Fahrzeugen im Güterverkehr nach dem Oberbegriff des Patentanspruchs 16.

Nutzfahrzeuge, welche für den Transport von Waren und Gütern eingesetzt werden, und die zu transportierenden Waren und Güter müssen für die Zwecke der Logistik und Disposition transparent verfolgt und identifiziert werden.

Der Erfindung liegt daher die Aufgabe zugrunde, zu einer zuverlässigen Identifizierung und Geolokalisierung von Nutzfahrzeugen und damit auch deren transportierten Ladeträgern und / oder Stückgütern zu gelangen.

Zur Lösung dieser Aufgabe wird ein Verfahren zur Fahrzeug-Identifizierung oder - Lokalisierung mit den Merkmalen des Anspruchs 16 vorgeschlagen.

Bei dem Verfahren werden die Signale des am Fahrzeug befestigten oder diesem beigelegten Transponders mit Funkeinheit (im Folgenden wiederum "Tag") ausschließlich über das Schmalband oder Ultraschmalband an die nächstgelegene stationäre Sende- und Empfangseinheit übertragen. Die für die Signalübertragung ausschließlich verwendete Technologie ist also die Narrowband oder Ultranarrowband Technologie.

Eine Signalübertragung der Tags mit diesen Technologien hat den Vorteil eines energiesparenden Betriebs des einzelnen Tags, da hier zwar einerseits die Datentransferraten deutlich reduziert sind, aber anderseits der Energiebedarf nur bei einem Bruchteil der herkömmlichen Mobilfunktechnologien liegt. Dies kann zusätzlich dadurch unterstützt werden, dass das Tag nur sendet, wenn es sich in Bewegung befindet. Auf diese Weise wird eine besonders effiziente und energiearme Tag-Vernetzung erreicht - die Grundlage für ein darauf aufbauendes, höchst effizientes Logistik- oder Fuhrparkmanagement sowie eine transparente Fahrzeug- und Transportgutverfolgung im Güterverkehr.

Gemäß einer Ausgestaltung des Verfahrens zur Ortung und Identifizierung von Fahrzeugen wird vorgeschlagen, dass das Kommunikations-Schmalband mit einer Empfängerbandbreite von 800 bis 1000 MHz arbeitet.

Gemäß einer Ausgestaltung des Verfahrens zur Ortung und Identifizierung von Fahrzeugen wird vorgeschlagen, dass die Stromversorgung des Transponders durch eine an dem Transponder angeordnete Spannungsquelle erfolgt.

Gemäß einer Ausgestaltung des Verfahrens zur Ortung und Identifizierung von Fahrzeugen wird vorgeschlagen, dass die Spannungsquelle elektrisch wiederaufladbar ist und das Aufladen erfolgt, bevor der Transponder an dem Fahrzeug befestigt wird.

Gemäß einer besonders vorteilhaften Ausgestaltung des Verfahrens zur Ortung und Identifizierung von Fahrzeugen wird vorgeschlagen, dass das Laden der Spannungsquelle durch das Gewinnen elektrischer Energie aus Quellen wie Umgebungstemperatur, Vibrationen, Bewegungen oder Luftströmungen erfolgt.

Gemäß einer besonders vorteilhaften Ausgestaltung des Verfahrens zur Ortung und Identifizierung von Fahrzeugen wird vorgeschlagen, dass die Spannungsversorgung und / oder das Aufladen der elektrisch aufladbaren Spannungsquelle über einen Anschluss an das Bordstromnetz des Fahrzeugs erfolgt.

Gemäß einer besonders vorteilhaften Ausgestaltung des Verfahrens zur Ortung und Identifizierung von Fahrzeugen wird vorgeschlagen, dass der Anschluss an ein EBS-System des Fahrzeugs erfolgt.

Gemäß einer Ausgestaltung des Verfahrens zur Ortung und Identifizierung von Fahrzeugen wird vorgeschlagen, dass die an die stationäre Sende- und Empfangseinheit übertragenen Transpondersignale eine für die Funkeinheit ("Tag") individuelle Kennung umfassen.

Gemäß einer Ausgestaltung des Verfahrens zur Ortung und Identifizierung von Fahrzeugen wird vorgeschlagen, dass die übertragenen Tag-Signale außerdem Fahrzeuginformationen, insbesondere den Kilometerstand und / oder Größendaten und / oder Gewichtsdaten umfassen.

Gemäß einer Ausgestaltung des Verfahrens zur Ortung und Identifizierung von Fahrzeugen wird vorgeschlagen, dass die übertragenen Tag-Signale außerdem Umgebungsdaten wie Temperatur und / oder Luftfeuchtigkeit und / oder Erschütterungen und / oder Bewegungen und / oder Luftdruck umfassen.

Gemäß einer Ausgestaltung des Verfahrens zur Ortung und Identifizierung von Fahrzeugen wird vorgeschlagen, dass die übertragenen Tag-Signale außerdem Informationen über den Zustand der Ladeträger und / oder Stückgüter und / oder den Zustand der Ladungssicherung umfassen.

Gemäß einer besonders vorteilhaften Ausgestaltung des Verfahrens zur Ortung und Identifizierung von Fahrzeugen wird vorgeschlagen, dass die übertragenen Tag-Signale außerdem Informationen über in der Nähe befindliche Ladeträger bzw. Stückgüter und / oder Geräte umfassen.

Gemäß einer besonders vorteilhaften Ausgestaltung des Verfahrens zur Ortung und Identifizierung von Fahrzeugen wird vorgeschlagen, dass die übertragenen Tag-Signale außerdem Informationen über eine unbeabsichtigtes und / oder missbräuchliches Entfernen des Tags von dem Fahrzeug umfassen.

Gemäß einer Ausgestaltung des Verfahrens zur Ortung und Identifizierung von Fahrzeugen wird vorgeschlagen, dass die empfangenen Tag-Signale zusammen mit Positionsdaten des aktuellen Tag-Standorts und / oder den Standortdaten der stationären Sende- und Empfangseinheit zu einem Datensatz zusammengestellt, und einer Datenbank und / oder Software zur Verfügung gestellt werden.

Gemäß einer Ausgestaltung des Verfahrens zur Ortung und Identifizierung von Fahrzeugen wird vorgeschlagen, dass die Datenbank und / oder Software die individuelle Kennung mit Positionsdaten und / oder Eigenschaftsdaten des jeweiligen Ladeträgers bzw. Stückguts wie z. B. Größendaten oder Gewichtsdaten, Zustand der Ladungssicherung, Temperatur,-Luftdruck- Luftfeuchtigkeit-, Erschütterungs-, Bewegungsdaten, in der Nähe befindlicher Geräte oder Ladeträger bzw. Stückgüter und mit Systemdaten eines EDV-gestützten Logistik- oder Fuhrparkmanagements verknüpft.

Gemäß einer Ausgestaltung des Verfahrens zur Ortung und Identifizierung von Fahrzeugen, wobei dieses Verfahren im Rahmen eines Fuhrparkmanagements durchgeführt wird, wird ferner vorgeschlagen, dass zu den Systemdaten des Fuhrparkmanagements das Transportvolumen und die maximale Zuladung einzelner Nutzfahrzeuge gehören, und dass die Software für die Nutzfahrzeuge deren Restladevolumen und/oder deren Restladegewicht errechnet.

Gemäß einer besonders vorteilhaften Ausgestaltung des Verfahrens zur Ortung und Identifizierung von Fahrzeugen wird vorgeschlagen, dass mit den Systemdaten eines Logistikmanagements auch Daten aus anderen Datenbanken bzw. Softwaresystemen verknüpft werden und / oder die Software Vorschläge für die Verbesserung der logistischen Prozesse macht.

Gemäß einer besonders vorteilhaften Ausgestaltung des Verfahrens zur Ortung und Identifizierung von Fahrzeugen wird vorgeschlagen, dass die Software Vorschläge für das Zusammenlegen von Transporten und / oder eine effizientere Nutzung des Laderaums macht.

Gemäß einer besonders vorteilhaften Ausgestaltung des Verfahrens zur Ortung und Identifizierung von Fahrzeugen wird vorgeschlagen, dass die Software vor dem missbräuchlichen Entfernen eines Tags und / oder einem möglichen Diebstahl des Fahrzeuges warnt.

Gemäß einer besonders vorteilhaften Ausgestaltung des Verfahrens zur Ortung und Identifizierung von Fahrzeugen wird vorgeschlagen, dass die Software Daten bereitstellt zur Verarbeitung und / oder Anzeige in angebundenen Softwaresystemen und / oder die Software aus angebundenen Softwaresystemen Daten ausliest und weiterverarbeitet.

Gemäß einer Ausgestaltung des Verfahrens zur Ortung und Identifizierung von Fahrzeugen wird vorgeschlagen, dass die Software die individuelle Kennung und die Positionsdaten mit Daten eines satellitengestützten Fahrzeug-Navigationssystems einschließlich Daten zum Fahrtziel verknüpft.

Gemäß einer Ausgestaltung des Verfahrens zur Ortung und Identifizierung von Fahrzeugen wird vorgeschlagen, dass die Software die voraussichtliche Ankunftszeit am Fahrtziel oder / oder dem Bestimmungsort des Fahrzeuges sowie die restliche Fahrtstrecke und / oder Fahrzeit bis an das Fahrtziel und / oder den Bestimmungsort errechnet.

Gemäß einer besonders vorteilhaften Ausgestaltung des Verfahrens zur Ortung und Identifizierung von Fahrzeugen wird vorgeschlagen, dass die Software für die Bestimmung der Ankunftszeit bzw. der Reststrecke Informationen anderer Tags über deren Positionen und / oder deren Fortbewegungsgeschwindigkeit und / oder deren Bewegungen und / oder Erschütterungen verwendet.

Gemäß einer besonders vorteilhaften Ausgestaltung des Verfahrens zur Ortung und Identifizierung von Fahrzeugen wird vorgeschlagen, dass die Software für die Bestimmung der Ankunftszeit bzw. Reststrecke Daten aus anderen Datenquellen, wie z. B. Verkehrs- oder Wetterdaten, verwendet.

Die autarke Stromversorgung des einzelnen Tags erfolgt vorzugsweise durch eine direkt an dem Tag angebrachte Spannungsquelle oder eine Anbindung an das Bordstromnetz des Fahrzeuges oder reiner Kombination aus beidem. Außerdem können "energy harvesting" Techniken (bspw. innerhalb der Radnabe einer nicht angetriebenen Achse) zum Einsatz kommen.

Die zu der stationären Sende- und Empfangseinheit gelangenden Tag-Signale umfassen zumindest die für den jeweiligen Tag individuelle Kennung. Zusätzlich können, sofern der Tag vorher entsprechend aktiviert bzw. mit der entsprechenden Sensorik ausgestattet ist, die übertragenen Tag-Signale die Geoposition, Temperatur-, Erschütterungs- oder sonstige Sensordaten umfassen. Durch einen Anschluss des jeweiligen Tag an die EBS (elektronisches Bremssystem) des Fahrzeuges können die übertragenen Tag-Signale Daten der EBS, wie bspw. die km-Laufleistung, umfassen.

Die von der stationären Sende- und Empfangseinheit empfangenen Tagsignale werden zusammen z. B. mit Positionsdaten des aktuellen Tag-Standorts und / oder den Standortdaten der die Signale empfangenden stationären Sende- und Empfangseinheit zu einem Datensatz zusammengestellt und an eine Datenbank übermittelt. Für ein effektives Logistik- oder Fuhrparkmanagement ist die Software, die auf die Datenbank zugreift und die Tag-Daten verarbeitet in der Weise ausgestaltet, dass die individuelle Kennung und z. B. die Positionsdaten oder sonstige Sensordaten, insbesondere Daten über den Zustand des Fahrzeuges, des Transportgutes, der Verpackung oder der Ladungssicherung mit Eigenschaftsdaten des jeweiligen Stückguts oder Fahrzeuges wie z.B. Größen- oder Gewichtsdaten, Sender- oder Empfängeradresse, oder anderweitig bezogenen Daten wie Verkehr-, Wetter-, oder Transportrisikoinformationen sowie mit in einer Datenbank zur Verfügung stehenden Systemdaten eines Logistik- oder Fuhrparkmanagements verknüpft werden.

Zu diesen Systemdaten eines EDV-gestützten Logistik- oder Fuhrparkmanagements können auch das Transportvolumen, die Eigenschaften des Transportgutes oder des Ladeträgers oder die maximale Zuladung der einzelnen eingesetzten oder verfügbaren Fahrzeuge gehören. Die in einer entsprechenden Datenbank gespeicherten Systemdaten schaffen die Grundlage dafür, dass die Software für die Fahrzeuge deren Restladevolumen und / oder deren Restladegewicht bestimmen, Empfehlungen zur Optimierung des einzelnen Transports oder des gesamten Logistikprozesses, Warnung vor Verstößen gegen Sicherheitsvorgaben oder Vorschläge für die unternehmensübergreifende Zusammenlegung von Transporten geben kann.

Die Software kann ferner ausgestaltet sein, die individuelle Kennung des signaltechnisch erfassten Tags und z. B. seine Positionsdaten mit Daten eines satellitengestützten Fahrzeug-Navigationssystems einschließlich Daten zum Fahrtziel zu verknüpfen. Auf diese Weise kann von der Auswerteeinheit z.B. die voraussichtliche Ankunftszeit am Fahrtziel sowie die restliche Fahrstrecke bis an das Fahrtziel ermittelt werden.

Mobilfunkkommunikationssysteme wie z. B. solche nach dem LTE Standard sind auf große Datentransferraten ausgelegt, was mit hohem Energieverbrauch bei den mobilen Sendegeräten "erkauft" wird. Mit der Schmalband und der Ultra Schmalband Technologie ("NarrowBand" bzw. "Ultranarrowband") geht man den entgegengesetzten Weg: sehr geringe Datentransferraten und u. a. dadurch sehr geringer Energiebedarf der Mobilgeräte. Das Schmalband ermöglicht daher eine besonders effiziente und stromsparende Vernetzung von Geräten, die mit (Ultra-)Narrowband Funkeinheiten ausgestattet sind. Durch eine Reduktion auf wenige, aber wesentliche Eigenschaften können (Ultra-)Narrowband Funkeinheiten je nach Anwendungsfall auch jahrelang mit einer Akku-Ladung bzw. Batterie auskommen. Zudem bieten sie sich für eine Stromversorgung durch "energy harvesting", also die Gewinnung kleiner Mengen von elektrischer Energie aus Quellen wie Umgebungstemperatur, Vibrationen oder Luftströmungen an.

Die Schmalband- und Ultraschmalbandtechnologie ermöglicht eine bessere Nachrichtenübertragung auch in Gebäuden. In Kombination mit einer cloudgestützten Lokalisierungsfunktion kann damit auch in Industriegebäuden eine Position bestimmt werden. Mit herkömmlichen GPS-Sensoren und GSM ist dies oft nicht sehr zuverlässig möglich, auf Grund des hohen Metallanteils in der Baumasse.

Da diese Technologien außerdem den Vorteil haben, dass deren stationäre Sende- und Empfangseinheiten wesentlich mehr Funkeinheiten verwalten können als herkömmliche Mobilfunktechnologien, ist (Ultra-)Narrowband sehr gut für "Internet of Things" Anwendungen geeignet. Also wenn es darum geht, sehr viele mit Funkeinheiten ausgestattete Geräte mit dem Internet zu verbinden, die nur wenige Daten senden und empfangen müssen, um darauf beruhende Software bzw. Services anzubieten, wie vorausschauende Wartung, Geolokalisierung, Überwachung von Transportbedingungen, nutzungsbasierte Abrechnungsmodelle, unternehmensübergreifende Vernetzung von Transporten oder einfache Telematikanwendungen.

## Patentansprüche

1. Verfahren zur Ladeträger- und Stückgut-Identifizierung im Güterverkehr, wobei die Ladeträger bzw. Stückgüter im Laderaum eines Nutzfahrzeugs angeordnet und jeweils mit signalabgebend oder signalreflektierend ausgebildeten Transpondern mit Funkeinheit ("Tags") versehen sind, und wobei die Tag-Signale durch eine stationäre Sende- und Empfangseinheit eines allgemeinen Telekommunikationsnetzes erfasst werden, **dadurch gekennzeichnet, dass** die stationäre Sende- und Empfangseinheit für Signale in mindestens einem Kommunikations-Schmalband oder -Ultraschmalband ausgebildet ist, und dass die Tag-Signale ausschließlich über das Schmalband bzw. das Ultraschmalband an die stationäre Sende- und Empfangseinheit übertragen werden.

2. Verfahren nach Anspruch 1, **dadurch gekennzeichnet, dass** das Kommunikations-Schmalband- bzw. Ultraschallband mit einer Empfängerbandbreite von 800 bis 1000 MHz arbeitet.

3. Verfahren nach Anspruch 1 oder 2, **dadurch gekennzeichnet, dass** die Stromversorgung des Transponders durch eine an dem Transponder angeordnete Spannungsquelle erfolgt.

4. Verfahren nach Anspruch 3, **dadurch gekennzeichnet, dass** die Spannungsquelle elektrisch wiederaufladbar ist und das Aufladen erfolgt, bevor der Transponder an dem Stückgut befestigt wird.

5. Verfahren nach einem der vorangehenden Ansprüche, **dadurch gekennzeichnet, dass** die an die stationäre Sende- und Empfangseinheit übertragenen Transpondersignale eine für die Funkeinheit ("Tag") individuelle Kennung umfassen.

6. Verfahren nach Anspruch 5, **dadurch gekennzeichnet, dass** die übertragenen Transponder-Signale außerdem Größendaten und / oder Gewichtsdaten umfassen.

7. Verfahren nach Anspruch 5 oder 6, **dadurch gekennzeichnet, dass** die übertragenen Transponder-Signale außerdem Umgebungsdaten wie Temperatur und / oder Luftfeuchtigkeit und / oder Erschütterungen und / oder Bewegungen und / oder Luftdruck umfassen.

8. Verfahren nach einem der Ansprüche 5 - 7, **dadurch gekennzeichnet, dass** die übertragenen Transponder-Signale außerdem Informationen über den Zustand der Ladeträger und / oder Stückgüter und / oder den Zustand der Ladungssicherung umfassen.

9. Verfahren nach einem der Ansprüche 5 - 8, **dadurch gekennzeichnet, dass** die übertragenen Transponder-Signale außerdem Informationen über in der Nähe befindliche Ladeträger bzw. Stückgüter und / oder Geräte umfassen.

10. Verfahren nach einem der Ansprüche 5 - 9, **dadurch gekennzeichnet, dass** die empfangenen Tag-Signale zusammen mit Positionsdaten des aktuellen Tag-Standorts und / oder den Standortdaten der stationären Sende- und Empfangseinheit zu einem Datensatz zusammengestellt, und einer Datenbank und / oder Software zur Verfügung gestellt werden.

11. Verfahren nach Anspruch 10, **dadurch gekennzeichnet, dass** die Datenbank und / oder Software die individuelle Kennung mit Positionsdaten und / oder Eigenschaftsdaten des jeweiligen Ladeträgers bzw. Stückguts wie z.B. Größendaten oder Gewichtsdaten, Zustand der Ladungssicherung, Temperatur,- Luftdruck-Luftfeuchtigkeit-, Erschütterungs-, Bewegungsdaten, in der Nähe befindlicher Geräte oder Ladeträger bzw. Stückgüter und mit Systemdaten eines EDV-gestützten Logistik- oder Fuhrparkmanagements verknüpft.

12. Verfahren nach Anspruch 10 oder 11, **dadurch gekennzeichnet, dass** dieses im Rahmen eines Logistikmanagements durchgeführt wird, zu dessen Systemdaten das Transportvolumen und die maximale Zuladung einzelner Nutzfahrzeuge gehören, und dass die Software für die Nutzfahrzeuge deren Restladevolumen und/oder deren Restladegewicht errechnet.

13. Verfahren nach einem der Ansprüche 10 - 12, **dadurch gekennzeichnet, dass** die Software Vorschläge für das Zusammenlegen von Transporten und / oder eine effizientere Nutzung des Laderaums macht.

14. Verfahren nach einem der Ansprüche 10 - 13, **dadurch gekennzeichnet, dass** die Software die individuelle Kennung und die Positionsdaten mit Daten eines satellitengestützten Fahrzeug-Navigationssystems einschließlich Daten zum Fahrtziel verknüpft.

15. Verfahren nach Anspruch 14, **dadurch gekennzeichnet, dass** die Software die voraussichtliche Ankunftszeit am Fahrtziel oder / oder dem Bestimmungsort des Ladeträgers bzw. Stückguts sowie die restliche Fahrtstrecke und / oder Fahrtzeit bis an das Fahrtziel und / oder den Bestimmungsort errechnet.

16. Verfahren zur Identifizierung und Ortung von Fahrzeugen im Güterverkehr, wobei die Fahrzeuge jeweils mit signalabgebend oder signalreflektierend ausgebildeten Transpondern mit Funkeinheit (in Folgenden "Tag") versehen sind, und wobei die Tag-Signale durch eine stationäre Sende- und Empfangseinheit eines allgemeinen Telekommunikationsnetzes erfasst werden, **dadurch gekennzeichnet, dass** die stationäre Sende- und Empfangseinheit für Signale in mindestens einem Kommunikations-Schmalband oder -Ultraschmalband ausgebildet ist, und dass die Tag-Signale ausschließlich über das Schmalband bzw. Ultraschmalband an die stationäre Sende- und Empfangseinheit übertragen werden.

17. Verfahren nach Anspruch 16, **dadurch gekennzeichnet, dass** das Kommunikations-Schmalband mit einer Empfängerbandbreite von 800 bis 1000 MHz arbeitet.

18. Verfahren nach Anspruch 16 oder 17, **dadurch gekennzeichnet, dass** die Stromversorgung des Transponders durch eine an dem Transponder angeordnete Spannungsquelle erfolgt.

19. Verfahren nach Anspruch 18, **dadurch gekennzeichnet, dass** die Spannungsquelle elektrisch wiederaufladbar ist und das Aufladen erfolgt, bevor der Transponder an dem Fahrzeug befestigt wird.

20. Verfahren nach einem der Ansprüche 16 - 19, **dadurch gekennzeichnet, dass** die an die stationäre Sende- und Empfangseinheit übertragenen Transpondersignale eine für die Funkeinheit ("Tag") individuelle Kennung umfassen.

21. Verfahren nach Anspruch 20, **dadurch gekennzeichnet, dass** die übertragenen Tag-Signale außerdem Fahrzeuginformationen, insbesondere den Kilometerstand und / oder Größendaten und / oder Gewichtsdaten umfassen.

22. Verfahren nach Anspruch 20 oder 21, **dadurch gekennzeichnet, dass** die übertragenen Tag-Signale außerdem Umgebungsdaten wie Temperatur und / oder Luftfeuchtigkeit und / oder Erschütterungen und / oder Bewegungen und / oder Luftdruck umfassen.

23. Verfahren nach einem der Ansprüche 20 - 22, **dadurch gekennzeichnet, dass** die übertragenen Tag-Signale außerdem Informationen über den Zustand der Ladeträger und / oder Stückgüter und / oder den Zustand der Ladungssicherung umfassen.

24. Verfahren nach einem der Ansprüche 20 - 23, **dadurch gekennzeichnet, dass** die empfangenen Tag-Signale zusammen mit Positionsdaten des aktuellen Tag-Standorts und / oder den Standortdaten der stationären Sende- und Empfangseinheit zu einem Datensatz zusammengestellt, und einer Datenbank und / oder Software zur Verfügung gestellt werden.

25. Verfahren nach Anspruch 24, **dadurch gekennzeichnet, dass** die Datenbank und / oder Software die individuelle Kennung mit Positionsdaten und / oder Eigenschaftsdaten des jeweiligen Ladeträgers bzw. Stückguts wie z.B. Größendaten oder Gewichtsdaten, Zustand der Ladungssicherung, Temperatur,- Luftdruck- Luftfeuchtigkeit-, Erschütterungs-, Bewegungsdaten, in der Nähe befindlicher Geräte oder Ladeträger bzw. Stückgüter und mit Systemdaten eines EDV-gestützten Logistik- oder Fuhrparkmanagements verknüpft.

26. Verfahren nach Anspruch 25, **dadurch gekennzeichnet, dass** dieses im Rahmen eines Fuhrparkmanagements durchgeführt wird, zu dessen Systemdaten das Transportvolumen und die maximale Zuladung einzelner Nutzfahrzeuge gehören, und dass die Software für die Nutzfahrzeuge deren Restladevolumen und/oder deren Restladegewicht errechnet.

27. Verfahren nach einem der Ansprüche 24 - 26, **dadurch gekennzeichnet, dass** die Software die individuelle Kennung und die Positionsdaten mit Daten eines satellitengestützten Fahrzeug-Navigationssystems einschließlich Daten zum Fahrtziel verknüpft.

28. Verfahren nach Anspruch 27, **dadurch gekennzeichnet, dass** die Software die voraussichtliche Ankunftszeit am Fahrtziel oder / oder dem Bestimmungsort des Fahrzeuges sowie die restliche Fahrtstrecke und / oder Fahrzeit bis an das Fahrtziel und / oder den Bestimmungsort errechnet.
